# FASCICULE DE BREVET EUROPEEN

(11) **EP 0 505 224 B1**
(45) Date de publication et mention de la délivrance du brevet: **17.05.1995**
(21) Numéro de dépôt: 92400445.0
(22) Date de dépôt: 20.02.1992
(51) Int. Cl.: B60T 8/40, B60T 8/44, B60T 13/14, B60T 13/66

(54) **Système intégré d'amplification et de modulation de pression pour un circuit hydraulique**
Integriertes Druckverstärkungs- und Modulierungssystem für Hydraulikkreise
Integrated pressure boost and modulate system for hydraulic circuit

(30) Priorité: 20.03.1991 FR 9103375
(43) Date de publication de la demande: 23.09.1992
(73) Titulaire: ALLIEDSIGNAL EUROPE SERVICES TECHNIQUES, 93700 Drancy (FR)
(72) Inventeur: Lebret, Pierre, BENDIX EUROPE Services Techniques, F-93700 Drancy (FR)
(74) Mandataire: Bentz, Jean-Paul

(56) Documents cités:
- EP-A- 0 182 053
- EP-A- 0 369 412
- WO-A-90/05658
- DE-A- 3 408 593
- GB-A- 2 215 416

## Description

L'invention concerne un système intégré d'amplification et de modulation de pression pour un circuit hydraulique de freinage de véhicules automobiles à antiblocage des roues au freinage. Les systèmes actuels d'antiblocage mettent en oeuvre, entre un générateur de fluide sous pression et un moteur hydraulique, une électrovalve commandée par un calculateur en fonction de signaux représentatifs de la rotation des roues du véhicule pour, de manière générale, détendre la pression du fluide dans le moteur hydraulique lorsque le calculateur détecte l'imminence du blocage d'une roue, puis connecter une deuxième source de fluide sous pression pour augmenter à nouveau la pression, jusqu'à une nouvelle détection d'imminence de blocage, le cycle se renouvelant alors.

L'électrovalve utilisée est une électrovalve fonctionnant en tout-ou-rien. Or les périodes d'antiblocage où des cycles tels le cycle précité se réalisent, durent un certain temps pendant lequel l'électrovalve change de très nombreuses fois d'états dans un temps très court. Cela provoque un bruit désagréable de battement de la partie mobile de l'électrovalve.

Par ailleurs, le système fonctionnant en tout-ou-rien, il apparaît des à-coups de pression dans les freins engendrant des régimes transitoires mal contrôlés.

En outre, la partie faisant fonction d'amplificateur hydraulique et la partie servant à l'antiblocage sont deux parties physiquement indépendantes.

La présente invention met en oeuvre une électrovalve dite proportionnelle assurant dans le circuit utilisateur une pression hydraulique fonction du courant circulant dans la bobine de l'électrovalve dans une plage déterminée de déplacement du noyau magnétique de l'électrovalve.

Une telle électrovalve présente alors l'avantage de pouvoir être commandée en faisant simplement varier le courant circulant dans la bobine sans nécessiter de battements de la partie mobile; il en résulte donc une forte diminution des à-coups de pression dans les freins. En outre, une telle électrovalve peut aisément être commandée par un calculateur assurant un découpage à fréquence variable d'un courant continu tel qu'on le trouve à bord d'un véhicule automobile, ou bien un découpage à fréquence fixe et à rapport cyclique variable, l'intensité du courant intégré par la bobine étant alors fonction du rapport cyclique.

Une telle électrovalve est par exemple décrite dans US-A-4,744,389. Toutefois, l'électrovalve décrite dans ce document ne peut pas être disposée dans un circuit hydraulique de freinage à antiblocage des roues du fait des pressions mises en oeuvre, notamment lors de l'excitation de l'électrovalve. En effet, l'électrovalve de ce document est conçue pour fonctionner en permanence dans un système de régulation d'une pression relativement faible. Cette limitation physique interdit donc l'utilisation de telle électrovalve avec des pressions élevées dans le moteur hydraulique.

On connaît également du document EP-A-0 369 412, un système de modulation de pression correspondant au préambule de la revendication principale, dans lequel l'amplification de la pression est réalisée par un système séparé.

La présente invention a donc pour objet un système de modulation de pression pour un circuit hydraulique de freinage comprenant au moins un maître-cylindre, un moteur hydraulique, une source de fluide sous haute pression, un réservoir de fluide sous basse pression, un solénoïde piloté par un calculateur modulant par l'intermédiaire d'un noyau magnétique, la position d'un tiroir coulissant dans un alésage et qui reçoit la force exercée par un ressort de rappel au repos, une chambre de réaction reliée en permanence audit moteur hydraulique, ce moteur hydraulique étant connecté soit audit réservoir, soit à la source de fluide sous pression selon la position du tiroir.

Selon l'invention, le fluide sous pression issu du maître-cylindre est appliqué en permanence à une face dudit tiroir dont l'autre face est en appui sur ledit noyau magnétique et reçoit la force exercée par le ressort de rappel, et la chambre de réaction est ménagée dans le tiroir, ce système constituant un système intégré d'amplification et de modulation de pression.

L'invention sera mieux comprise et d'autres buts, avantages et caractéristiques de celle-ci apparaitront plus clairement à la lecture de la description qui suit de deux modes de réalisation donnés à titre non limitatif et à la lumière du dessin annexé sur lequel :

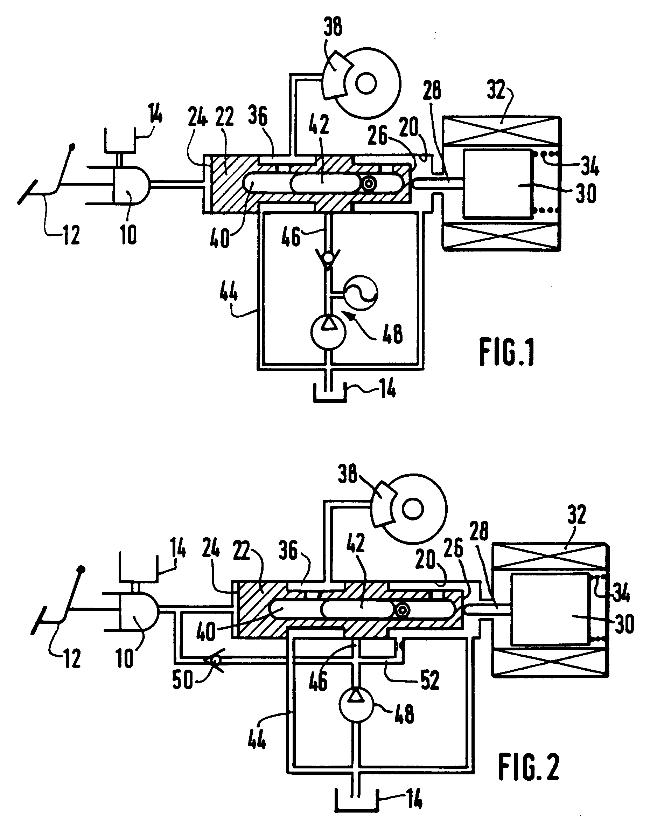

Les figures 1 et 2 représentent schématiquement deux modes de réalisation d'un système intégré conforme à l'invention.

En référence maintenant à la figure 1, une chambre de pression d'un maître-cylindre 10 commandé par une pédale 12 est alimentée en fluide sous basse pression à partir d'un réservoir 14 (représenté deux fois pour des raisons de commodités).

Dans un alésage 20 pratiqué dans un corps, un tiroir 22 est susceptible de coulisser de façon étanche. Sur la face 24 de ce tiroir 22 est appliquée la pression du fluide régnant dans le maître-cylindre 10. Sur la face opposée 26 de ce tiroir 22 vient en appui, directement ou indirectement par l'intermédiaire de la tige 28, un noyau magnétique 30 animé par un solenoïde 32. Un ressort de rappel 34 ramène l'équipage au repos dans le sens contraire à celui imprimé par la pression du fluide issu du maître-cylindre 10.

Le tiroir 22 est pourvu d'une gorge 36 à laquelle est reliée en permanence au moins un moteur hydraulique 38, dans le cas présent un moteur de frein. La gorge 36 communique avec une chambre de réaction 40 ménagée à l'intérieur du tiroir 22. Cette chambre de réaction 40 est constituée par un alésage du tiroir 22 dans lequel est disposée, de façon étanche, une aiguille 42 fixe par rapport à l'alésage 20, de manière à déterminer une chambre 40 à volume variable.

De façon conventionnelle, la partie de l'alésage 20 enfermant la tige 28 communique avec le réservoir de fluide sous basse pression 14. Deux conduits communiquent enfin avec l'alésage 20 au niveau du tiroir 22. L'un 44 relie l'alésage 20 au réservoir 14 et est disposé de manière à communiquer avec la gorge 36 au repos de l'ensemble ; l'autre 46 est relié à une source de fluide sous haute pression 48, par exemple comprenant au moins une pompe.

Non représenté sur les figures, un calculateur détermine le courant à appliquer au solenoïde 32 en fonction d'informations prélevées au moyen de capteurs disposés près des roues.

Le fonctionnement est le suivant. Au repos, c'est-à-dire en absence de freinage, le moteur hydraulique 38 est relié au réservoir 14 du fait qu'aucune pression ne s'exerce sur la face 24 du tiroir 22. Dès que l'on actionne la pédale de frein, la pression du fluide issu du maître-cylindre 10 est appliquée à la face 24 du tiroir 22 à l'encontre du ressort de rappel 34. Le déplacement du tiroir ferme le conduit 44 et ouvre une communication entre le conduit 46 et le moteur de frein 38. Une pression s'établit donc dans la chambre de réaction 40, et le tiroir 22 prend une nouvelle position d'équilibre fonction des forces exercées. Il y a donc bien amplification hydraulique de l'effort exercé sur la pédale 12.

En cas de détection d'une imminence d'un blocage de la roue correspondante, le calculateur applique un courant au solenoïde 32, dont le noyau 30 se déplace sous l'effet magnétique, venant ainsi artificiellement augmenter la réaction dans la chambre 40. Le tiroir 22 se déplace alors vers la gauche sur la figure jusqu'à fermer le conduit 46 et ouvrir le conduit 44 entraînant ainsi une phase de détente de la pression dans le moteur hydraulique 38. Ensuite, sous l'effet conjugué des pressions appliquées à la face 24 et régnant dans la chambre 40, et l'effort de poussée appliqué par l'intermédiaire du solénoïde 32, le tiroir 22 entre en phase de régulation de pression en ouvrant et fermant successivement les conduits 44 et/ou 46, jusqu'à extinction de l'imminence du blocage de la roue.

En cas de défaillance de la source de fluide sous pression, le tiroir 22 agit comme un maître-cylindre, le volume de fluide emprisonné dans la chambre de réaction 40 étant alors comprimé sous l'action du maître-cylindre.

Sur la figure 2, on a utilisé les mêmes références pour désigner les mêmes composants. Les modifications apportées sont les suivantes :

La source de fluide sous pression 48 communique avec le maître-cylindre 10 par l'intermédiaire d'un clapet à bille 50 de type anti-retour normalement fermé et s'ouvrant lorsque la pression du fluide issu de la source 48 est inférieure à celle du fluide issu du maître-cylindre 10. En outre, une dérivation 52 pourvue d'une restriction, permet à la source de fluide sous pression 48 lorsqu'elle est constituée par une simple pompe de refouler le fluide sous pression non utilisé vers le réservoir 14 et d'éviter ainsi une fatigue exagérée de la pompe.

Ce mode de réalisation est prévu pour pallier le fait que la source de pression 48 lorsqu'elle est une simple pompe, n'est effective qu'après un temps déterminé certes court mais non négligeable pour la sécurité. Ainsi, lors d'un freinage, c'est le fluide issu du maître-cylindre 10 qui est appliqué au moteur hydraulique 38 via le clapet 50 et le conduit 46 communiquant alors avec la gorge 36 tant que la pression du fluide refoulé par la pompe n'a pas atteint un seuil suffisant. En outre, cette solution apporte un autre avantage en cas de défaillance de la pompe car, alors, le maître-cylindre 10 joue pleinement son rôle.

Bien que, seuls, les modes préférés de realisation aient été représentés et décrits, il est évident que l'homme du métier pourra apporter de nombreuses modifications sans sortir du cadre de l'invention, tel que défini par les revendications, ci-jointes.

## Revendications

1. Système de modulation de pression pour un circuit hydraulique de freinage comprenant au moins un maître-cylindre (10), un moteur hydraulique (38), une source de fluide sous haute pression (48), un réservoir de fluide sous basse pression (14), un solénoïde (32) piloté par un calculateur modulant par l'intermédiaire d'un noyau magnétique (30), la position d'un tiroir (22) coulissant dans un alésage (20) et qui reçoit la force exercée par un ressort (34) de rappel au repos, une chambre de réaction (40) reliée en permanence audit moteur hydraulique (38), ce moteur hydraulique (38) étant connecté soit audit réservoir (14), soit à la source de fluide sous pression (48) selon la position du tiroir (22), caractérisé en ce que le fluide sous pression issu du maître-cylindre (10) est appliqué en permanence à une face (24) dudit tiroir (22) dont l'autre face est en appui sur ledit noyau magnétique (30) et reçoit la force exercée par le ressort de rappel (34), et en ce que la chambre de réaction (40) est ménagée dans le tiroir (22), ce système constituant un système intégré d'amplification et de modulation de pression.

2. Système selon la revendication 1 caractérisé en ce que la dite chambre de réaction (40) est constituée par un alésage interne du dit tiroir (22) dans lequel est disposée de façon étanche une aiguille (42) fixe par rapport à l'alésage (20).

3. Système selon la revendication 2 caractérisé en ce qu'une communication normalement fermée est pratiquée entre la dite source de fluide sous pression (48) et la dite face (24) sur laquelle est appliquée la pression du fluide issu du maître-cylindre (10), un moyen de clapet (50) ouvrant cette communication lorsque la pression du fluide issu de la dite source sous pression (48) est inférieure à celle du fluide issu du dit maître-cylindre (10).

## Claims

1. Pressure modulation system for a hydraulic brake circuit, comprising at least one master cylinder (10), a hydraulic motor (38), a source of fluid under high pressure (48) and a reservoir of fluid under low pressure (14), a computer-controlled solenoid (32) modulating by means of a magnetic core (30) the position of a slide (22) which slides in a bore (20), and which receives the force exerted by a spring (34) for return to rest, a reaction chamber (40) connected permanently to said hydraulic motor (38), this hydraulic motor (38) being connected either to said reservoir (14) or to the source of fluid under pressure (48), depending on the position of the slide (22), characterized in that the fluid under pressure coming from the master cylinder (10) is applied permanently to one face (24) of said slide (22), the other face of which bears on said magnetic core (30) and receives the force exerted by the return spring (34), and in that the reaction chamber (40) is formed in the slide (22), this system constituting an integrated pressure amplification and modulation system.

2. System according to Claim 1, characterized in that said reaction chamber (40) consists of an internal bore of said slide (22), in which a needle (42) fixed relative to the bore (20) is arranged sealingly.

3. System according to Claim 2, characterized in that normally closed communication is formed between said source of fluid under pressure (48) and said face (24) to which the pressure of the fluid coming from the master cylinder (10) is applied, a valve means (50) opening this communication when the pressure of the fluid coming from said source under pressure (48) is below that of the fluid coming from said master cylinder (10).

## Patentansprüche

1. Druckmodulationssystem für einen hydraulischen Bremskreis mit wenigstens einem Hauptzylinder (10), einer hydraulischen Betätigungsvorrichtung (38), einer Hochdruckfluidquelle (48), einem Niederdruckfluidvorratsbehälter (14), einem Elektromagneten (32), der von einem Rechner gesteuert ist und mittels eines Magnetkerns (30) die Stellung eines in einer Bohrung (20) gleitenden Schiebers (22) ändert, der von einer Feder (34) zum Zurückstellen in die Ruhestellung beaufschlagt ist, sowie einer Reaktionskammer (40), die permanent mit der hydraulischen Betätigungsvorrichtung (38) verbunden ist, wobei die hydraulische Betätigungsvorrichtung (38) entsprechend der Stellung des Schiebers (22) entweder mit dem Vorratsbehälter (14) oder der Druckfluidquelle (48) verbunden ist, dadurch gekennzeichnet, daß das von dem Hauptzylinder (10) abgegebene Druckfluid permanent an eine Seite (24) des Schiebers (22) angelegt ist, dessen andere Seite sich an dem Magnetkern (30) abstützt und die von der Rückstellfeder (34) ausgeübte Kraft aufnimmt, und daß die Reaktionskammer (40) in dem Schieber (22) ausgebildet ist, wobei dieses System ein integriertes Druckverstärkungs- und modulationssystem bildet.

2. System nach Anspruch 1, dadurch gekennzeichnet, daß die Reaktionskammer (40) durch eine Innenbohrung des Schiebers (22) gebildet ist, in der in dichter Weise eine bezüglich der Bohrung (20) feststehende Nadel (42) angeordnet ist.

3. System nach Anspruch 2, dadurch gekennzeichnet, daß zwischen der Druckfluidquelle (48) und der Seite (24), an welcher der von dem Hauptzylinder (10) abgegebene Fluiddruck anliegt, eine normalerweise geschlossene Verbindung ausgebildet ist, wobei ein Ventilmittel (50) diese Verbindung öffnet, wenn der von der Druckquelle (48) abgegebene Fluiddruck kleiner als der Druck des von dem Hauptzylinder (10) abgegebenen Fluides ist.
